# EUROPÄISCHE PATENTANMELDUNG

(11) **EP 3 385 662 A1**
(43) Veröffentlichungstag der Anmeldung: **10.10.2018**
(21) Anmeldenummer: 18164162.2
(22) Anmeldetag: 27.03.2018
(51) Int. Cl.: G01B 11/02, G06T 7/60, G01C 11/00, G01B 11/24, G06T 17/00

(54) **VERFAHREN UND VORRICHTUNG ZUR BESTIMMUNG EINER GEOMETRISCHEN MESSGRÖSSE EINES OBJEKTES**

(30) Priorität: 05.04.2017 DE 102017107341
(71) Anmelder: Testo SE & Co. KGaA, 79853 Lenzkirch (DE)
(72) Erfinder: Wulff, Robert, 79098 Freiburg (DE); Strittmatter, Winfried, 79102 Freiburg (DE); Schätzle, Thomas, 79215 Biederbach (DE)
(74) Vertreter: Börjes-Pestalozza, Henrich

(57) **Zusammenfassung**

Aufmaßgerät (4) zur Bestimmung einer geometrischen Messgröße eines Objektes (1) anhand eines in einem Modellspeicher (13) hinterlegten dreidimensionalen Modells (11), das einen Schwerkraftvektor (g) aufweist, wobei das Aufmaßgerät (4) eine Markiereinheit (14) zum Markieren eines ersten Merkmals (P0) und eines zweiten Merkmals (P1) in dem Modell (11) aufweist und eine Einpassungseinheit (15) aufweist, zur Bestimmung einer ersten Hilfsgeometrie (L0), die wenigstens das erste markierte Punktmerkmal (P0) enthält und parallel zum Schwerkraftvektor (g) verläuft, und zur Bestimmung einer zweiten Hilfsgeometrie (E1), die wenigstens das zweite markierte Merkmal (P1) enthält und senkrecht zum Schwerkraftvektor (g) verläuft und zum Bilden des Schnittpunkts (P2) der Hilfsgeometrien (L0,E1), wobei eine Berechnungseinheit (17) zum Berechnen der geometrischen Messgröße mit Hilfe des Schnittpunkts (P2) vorhanden ist.

## Beschreibung

Die Erfindung betrifft ein Verfahren und ein Aufmaßgerät zur Bestimmung einer geometrischen Messgröße mit einem unbekannten Merkmal eines Objektes. Ein Aufmaß eines Objektes, insbesondere eines Gebäudes wird benötigt, um beispielsweise Handwerkerleistungen zu kalkulieren. Beim Aufmaß werden die Abmessungen aller relevanter Bauteile und Anbauten gemessen. Dies erfolgt in der Regel manuell mit einem Maßstab oder Maßband. Oder mit Hilfe eines Laserdistanzmessgeräts (LDM).

Ein LDM hat dabei den Vorteil, dass viele Maße alleine genommen werden können. An freien Ecken ist jedoch ein Reflektor notwendig, der zuvor dort angebracht werden muss oder während der Messung von einem Helfer gehalten werden muss, damit der Laser nicht ins Leere läuft.

Prinzipiell ist das Aufmaß auf diese Weise, je nach Objektgröße und -komplexität sehr zeit- und personalaufwändig. Zudem kann es bei größeren Objekten, etwa mehrgeschossigen Gebäuden, notwendig sein, ein Gerüst zu stellen, um etwa oben liegende Fenster zu vermessen.

Um diesen Aufwand beim Aufmaß zu reduzieren, gibt es vermehrt Bestrebungen, das Aufmaß anhand eines oder mehrerer Fotos durchzuführen.

Es ist im Stand der Technik bereits bekannt, eine bekannte Längenreferenz an dem Objekt anzubringen um dann ein Foto des Objekts aufzunehmen, so dass die Längenreferenz sichtbar ist. Anhand der bekannten Dimensionen kann bei einer bekannten Kameraoptik das Bild in der Lage korrigiert und referenziert werden. Dadurch können im Bild Strecken bis auf Zentimeter genau gemessen werden. Das Aufmaß ist dadurch wesentlich schneller und einfacher. Zudem wird die Gefahr reduziert, dass einzelne Strecken vergessen werden und somit erneut zum Objekt gefahren werden muss um nachzumessen. Alle Masse werden nachträglich anhand des Bildes bestimmt.

Bei diesem Fotoverfahren ist jedoch nachteilig, dass Maße nur in einer Ebene gemessen werden können. Liegt eine zu messende Messgröße nicht in der Hauptebene des Bildes, kann diese nicht bestimmt werden. Es ist dazu ein weiteres Bild in dieser Ebene notwendig.

Bei Strecken oder Größen, die aus der Aufnahmeebene heraus ragen ist eine Messung ganz unmöglich. Beispielsweise kann ein Balkon, der senkrecht von einer Fassade absteht, nicht in seiner Tiefe in einem Bild gemessen werden.

Es ist daher beispielsweise aus der DE 10 2016 002 186 A1 bekannt, aus Bildern eines Objektes, die von verschiedenen Standorten und/oder Perspektiven aufgenommen wurden, ein dreidimensionales Modell des Objekts zu berechnen. Anhand dieses dreidimensionalen Modells können auch solche Strecken in der Tiefe bestimmt werden.

Aber auch bei der Aufnahme mehrerer Bilder kann es vorkommen, dass manche Messpunkte stets unsichtbar sind und dies auch durch Änderung der Kameraposition nicht änderbar ist. Beispielsweise kann die untere Kante eine Balkontür im vierten Obergeschoss eines Gebäudes stets durch den Balkon selbst verdeckt sein. In diesem Fall kann auch in einem dreidimensionalen Modell die Lage der Balkontür nicht bekannt sein.

Die Aufgabe der Erfindung ist es daher ein verbessertes Verfahren und eine Vorrichtung zur Bestimmung einer geometrischen Messgröße und/oder zur Ergänzung eines dreidimensionalen Modells mit einem unbekannten Merkmal eines Objektes zu schaffen.

Diese Aufgabe wird erfindungsgemäß durch das Verfahren in Anspruch 1 und das Aufmaßgerät nach Anspruch 7 gelöst.

Das Verfahren beruht im Wesentlichen darauf, dass in einem Modellierungsschritt ein dreidimensionales Modell des Objekts bereitgestellt wird, bei dem der Schwerkraftvektor bekannt ist. Dieses Modell kann auf beliebige Weise entstanden sein, beispielsweise in einem Computerprogramm. Der Schwerkraftvektor gibt im Modell die Richtung der Schwerkraft an. Er zeigt daher in Richtung der Schwerkraft und kann zur Ausrichtung des Modells gegenüber der Schwerkraft verwendet werden.

In einem Markierschritt werden dann in dem Modell ein erstes Merkmal und ein zweites Merkmal markiert, die mit der zu messenden geometrischen Messgröße in Beziehung stehen. So können die Merkmale beispielsweise jeweils ein Endpunkt einer zu bestimmenden Messgröße sein, deren anderer Endpunkt unbekannt ist.

In einem Einpassungsschritt wird dann eine erste Hilfsgeometrie bestimmt, die wenigstens das erste markierte Merkmal enthält und parallel zum Schwerkraftvektor verläuft, und eine zweite Hilfsgeometrie bestimmt, die wenigstens das zweite markierte Merkmal enthält und senkrecht zum Schwerkraftvektor verläuft und es wird ein Schnittpunkt der Hilfsgeometrien berechnet.

Eine solche Hilfsgeometrie kann beispielsweise eine Hilfsgerade oder eine Hilfsebene sein. Dabei kann jede Kombination aus Hilfsebenen und Hilfsgeraden verwendet werden, also zwei Hilfsebenen, zwei Hilfsgeraden oder eine Hilfseben und eine Hilfsgerade.

In einem Berechnungsschritt kann dann anhand des Schnittpunkts der beiden Hilfsgeometrien die zu bestimmende geometrische Größe berechnet werden. Die berechnete Messgröße kann beispielsweise eine Länge zwischen zwei Merkmalen sein, die jedoch nicht unbedingt die zur Bestimmung der Hilfsgeometrien verwendeten Merkmale sein müssen.

Zusätzlich kann der Schnittpunkt wie ein normales Merkmal dem dreidimensionalen Modell hinzugefügt werden, so dass er auch später für weitere Berechnungen zur Verfügung steht.

Das erfindungsgemäße Verfahren ist damit in der Lage auch geometrische Messgrößen zu bestimmen, die mit einem im Modell unbekannten Merkmal in Verbindung stehen, insbesondere im unbekannten Merkmal enden oder beginnen. Insbesondere geeignet ist das Verfahren zur Bestimmung von Messgrößen, die senkrecht oder parallel zum Schwerkraftvektor stehen.
In einer Ausführung der Erfindung mit eigenständigem Charakter wird:
- in einem Modellierungsschritt ein dreidimensionales Modell des Objekts bereit gestellt wird, bei dem der Schwerkraftvektor bekannt ist,
- in einem Markierschritt in dem Modell ein erstes Merkmal und ein zweites Merkmal markiert werden,
- in einem Einpassungsschritt eine erste Hilfsgeometrie bestimmt wird, die wenigstens das erste markierte Merkmal enthält und parallel zum Schwerkraftvektor verläuft, und eine zweite Hilfsgeometrie bestimmt wird, die wenigstens das zweite markierte Merkmal enthält und senkrecht zum Schwerkraftvektor verläuft, und ein Schnittpunkt der Hilfsgeometrien berechnet wird, und dieser Schnittpunkt als Merkmal in das dreidimensionale Modell aufgenommen wird.

Das bedeutet, dass im Unterschied zum dem oben beschriebenen Verfahren in dem Einpassungsschritt der Schnittpunkt der Hilfsgeometrien dann wie ein normales Merkmal dem Modell hinzugefügt wird, ohne eine Berechnung einer geometrischen Größe durchzuführen. Dadurch ist es beispielsweise möglich, ein aufgrund eines verdeckten Merkmals unvollständiges Modell zu ergänzen. Das Merkmal kann aber auch für alle Berechnungen verwendet werden, die auch mit den anderen Merkmalen des Modells möglich sind.

Insbesondere vorteilhaft ist das erfindungsgemäße Verfahren auch, wenn das dreidimensionale Modell zunächst aus einzelnen Bildern erstellt wird. In einer Weiterbildung der Erfindung werden in einem Aufnahmeschritt mit einer Bildaufnahmeeinheit mehrere visuelle Bilder des Objekts von unterschiedlichen Positionen aufgenommen, und gleichzeitig zu jedem Bild die Ausrichtung der Bildaufnahmeeinheit in Bezug auf den Schwerkraftvektor gespeichert.

In einem Modellierungsschritt wird ein dreidimensionales Modell des aufgenommenen Objekts aus den einzelnen Bildern erstellt, wobei der Schwerkraftvektor des Modells aus den einzelnen Ausrichtungen der Bilder bestimmt wird. Zur Erstellung des Modells sind im Stand der Technik verschiedene Verfahren bekannt, auf die hier zurückgegriffen werden kann. Neu hingegen ist die Verknüpfung mit dem Schwerkraftvektor, der eine Ausrichtung des Modells an der Schwerkraft ermöglicht. Nur dadurch können die Hilfsgeometrien zur Bestimmung der verdeckten Merkmale korrekt senkrecht zueinander eingepasst werden.

Der Vorteil beim erfindungsgemäßen Verfahren besteht nun darin, dass auch Merkmale, die in keinem der Bilder sichtbar sind, in die Berechnung von geometrischen Größen einbezogen werden können. Insbesondere, wenn das verdeckte Merkmal derart mit einem bekannten Merkmal in Beziehung steht, dass es in einer Hilfsgeometrie durch dieses bekannte Merkmal enthalten ist.

In einer vorteilhaften Weiterbildung der Erfindung, wird das erfindungsgemäße Verfahren nur auf präzise Merkmale, insbesondere Punktmerkmale, die sich beispielsweise als Schnittpunkte von Linienmerkmalen ergeben, angewendet.

Bei der Erkennung von Merkmalen können robuste Merkmale und präzise Merkmale unterschieden werden. Robuste Merkmale sind solche Merkmale, die in einer Szene oder einem Bild durch Deskriptoren so eindeutig beschrieben werden können, dass sie sehr leicht in anderen Bildern identifizierbar sind. In der Regel sind robuste Merkmale Punktmerkmale. Präzise Merkmale hingegen sind in der Regel für einen Betrachter leicht erkennbare und eventuell interessante Merkmale des Bildes, wie etwa Kanten oder Ecken von Objekten im Bild. Präzise Merkmale sind in einem Bild wesentlich genauer lokalisierbar als robuste Merkmale. Sie sind jedoch nicht oder nur ungenügend eindeutig in weiteren Bildern identifizierbar. Die Erkennung und Unterscheidung von robusten und präzisen Merkmalen ist im Stand der Technik bekannt. Präzise Merkmale können sich insbesondere vorteilhaft aus Schnittpunkten von Linien oder Kanten ergeben. Aufgrund der Einschränkung auf präzise Merkmale, die wesentlich genauer bestimmbar sind, kann eine erhöhte Präzision bei der Bestimmung der geometrischen Größe erreicht werden.

Das erfindungsgemäße Aufmaßgerät zur Bestimmung einer geometrischen Messgröße mit einem verdeckten Merkmal eines Objektes ist ausgestattet
- mit einem Modellspeicher, in dem ein dreidimensionales Modell des Objekts hinterlegbar oder hinterlegt ist, und einen Schwerkraftvektor aufweist,
- mit einer Anzeigeeinheit zum Anzeigen des Modells,
- mit einer Markiereinheit zum Markieren eines ersten Merkmals und eines zweiten Merkmals in dem Modell,
- mit einer Einpassungseinheit, zur Bestimmung einer ersten Hilfsgeometrie, die wenigstens das erste markierte Merkmal enthält und parallel zum Schwerkraftvektor verläuft, und zur Bestimmung einer zweiten Hilfsgeometrie, die wenigstens das zweite markierte Merkmal enthält und senkrecht zum Schwerkraftvektor verläuft, und zum Bilden des Schnittpunkts der Hilfsgeometrien,
- mit einer Berechnungseinheit, zum Berechnen der Abstände des Schnittpunkts zu den beiden markierten Merkmalen.

Ein alternatives Aufmaßgerät ist ausgestattet
- mit einem Modellspeicher, in dem ein dreidimensionales Modell des Objekts hinterlegbar oder hinterlegt ist, und einen Schwerkraftvektor aufweist,
- mit einer Anzeigeeinheit zum Anzeigen des Modells,
- mit einer Markiereinheit zum Markieren eines ersten Merkmals und eines zweiten Merkmals in dem Modell,
- mit einer Einpassungseinheit, zur Bestimmung einer ersten Hilfsgeometrie, die wenigstens das erste markierte Merkmal enthält und parallel zum Schwerkraftvektor verläuft, und zur Bestimmung einer zweiten Hilfsgeometrie, die wenigstens das zweite markierte Merkmal enthält und senkrecht zum Schwerkraftvektor verläuft, und zum Bilden des Schnittpunkts der Hilfsgeometrien, und zur Hinzufügung des Schnittpunktes als Merkmal zu dem dreidimensionalen Modell.

Zusätzlich kann diese Ausführung eine Berechnungseinheit aufweisen, zum Berechnen von geometrischen Messgrößen zwischen Merkmalen des Modells.

Eine vorteilhafte Weiterbildung des Aufmaßgeräts ist ausgestattet
- mit einer Bildaufnahmeeinheit zum Aufnehmen mehrerer visuelle Bilder des Objekts von unterschiedlichen Positionen,
- mit wenigstens einer Lagesensoreinheit, zur Speicherung der Ausrichtung der Bildaufnahmeeinheit in Bezug auf den Schwerkraftvektor zu jedem Bild das gespeichert wird,
- mit einer Modellierungseinheit zur Erstellung eines dreidimensionalen Modells des aufgenommenen Objekts aus den einzelnen Bildern, und zur Bestimmung des Schwerkraftvektors aus den aufgezeichneten Ausrichtungen der einzelnen Bilder.

Damit kann ein dreidimensionales Modell aus mehreren Bildern erstellt werden. Da zu jedem Bild der Schwerkraftvektor vorliegt, ist das Modell eindeutig gegenüber dem Schwerkraftvektor ausrichtbar.

Die Erfindung ist nachfolgend anhand eines bevorzugten Ausführungsbeispiels mit Bezug auf die beiliegenden Zeichnungen näher erläutert.

Es zeigt:
- Fig. 1: eine schematische Ansicht einer Fassade mit einem unbekannten Punktmerkmal,
- Fig. 2: eine schematische Darstellung des Modells mit Hilfslinien
- Fig. 3: eine schematische Darstellung einer Fassade mit einem Balkon vom Boden aus gesehen,
- Fig. 4: die Fig. 3 mit einer ersten Hilfsebene parallel zum Gravitationsvektor,
- Fig. 5: die Fig. 4 mit einer zweiten Hilfsebene senkrecht zum Gravitationsvektor,
- Fig. 6: die Fig. 5 mit einer Schnittgeraden der beiden Hilfsebenen, und
- Fig. 7: eine schematische Darstellung eines erfindungsgemäßen Aufmaßgeräts.

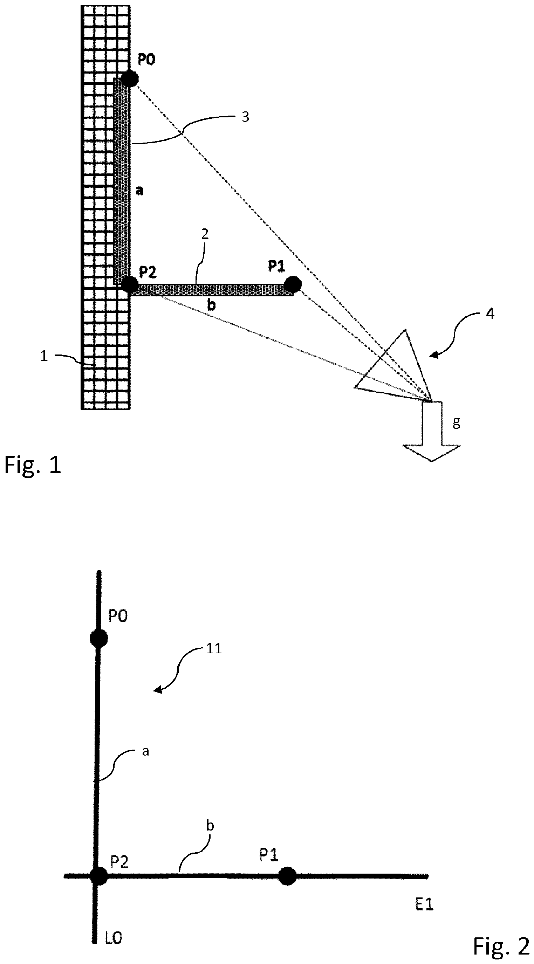

Die Fig. 1 zeigt schematisch einen Querschnitt einer Fassade 1 mit einem Balkon 2 und einer in der Fassade 1 angeordneten Balkontür 3. Ein erfindungsgemäßes Aufmaßgerät 4 ist vor der Fassade 1 platziert. Zur Erstellung eines dreidimensionalen Modells werden mit dem Aufmaßgerät 4 mehrere visuelle Bilder der Fassade 1 aufgenommen.

Im gezeigten Beispiel ist die Aufnahmepose des Aufmaßgeräts 4 so, dass auf dem Bild ein oberer Punkt P0 der Balkontür 3 sowie ein vorderer Punkt P1 des Balkons 2 zu sehen ist. Ein unterer Punkt P2 der Balkontür 3 ist jedoch durch den Balkon 2 verdeckt. Der Punkt P2 ist daher auf dem Bild nicht zu sehen. Ein Modell, das nach einem bekannten Verfahren auf Grundlage dieser Bilder erstellt wird, enthält P2 nicht als Punktmerkmal. Der Punkt P2 ist daher im Modell unbekannt. Eine Bestimmung eines geometrischen Maßes der Balkontür 3 oder des Balkons 2, das von P2 ausgeht oder diesen enthält, sind daher in diesem Modell nicht möglich.

Das erfindungsgemäße Verfahren sieht nun vor, dass bei der Aufnahme jedes Bildes der Schwerkraftvektor g bestimmt wird, der die Ausrichtung des Aufmaßgeräts 4 gegenüber der Schwerkraft beschreibt. Aufgrund der geometrischen Abhängigkeiten des Balkons 2 zur Fassade, stehen das Punktmerkmal P1 und das Punktmerkmal P0 in Beziehung zu dem verdeckten Punktmerkmal P2.

Um das verdeckte und unbekannte Punktmerkmal P2 zu bestimmen, wird nun das erste Merkmal P1 ausgewählt und eine erste Hilfsebene E1 durch P1 gelegt, die senkrecht zum Schwerkraftvektor g verläuft. Eine zweite Hilfsgerade L0 wird parallel zum Schwerkraftvektor g durch das zweite Merkmal P0 gelegt. Es wird nun der Schnittpunkt P2 der beiden Hilfsgeometrien L0 und E1 gebildet. Dieser Schnittpunkt P2 liegt dort, wo der Balkon 2 an der Fassade 1 anliegt. Er ist damit eine gute Näherung für den unbekannten Punkt der Balkontür 3.

Es können nun anhand des Punktes P2 beispielsweise die Höhe a der Balkontür 3 sowie die Tiefe b des Balkons 2 bestimmt werden.

Zusätzlich zur Berechnung der geometrischen Größen, kann der Schnittpunkt P2 zum Modell hinzugefügt werden, so dass er für spätere und/oder andere Berechnungen zur Verfügung steht, ohne erneut die Auswahl vornehmen zu müssen.

Das dreidimensionale Modell kann für diese Berechnung nach einem der bekannten Verfahren aus den mehreren Bildern erstellt werden. Wichtig dabei ist lediglich, dass ein Schwerkraftvektor am Modell verfügbar ist.

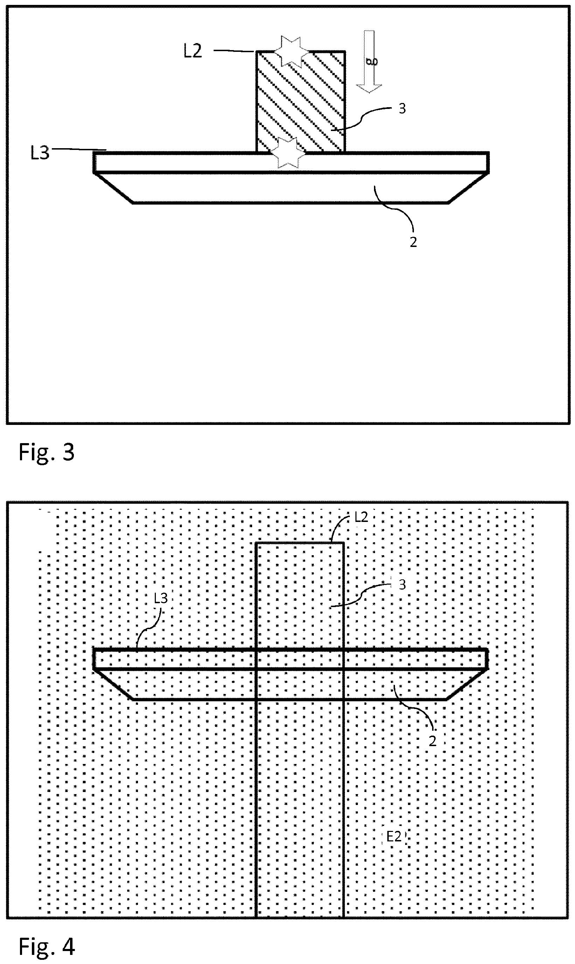

Eine weitere Variante des erfindungsgemäßen Verfahrens ist anhand der Fig. 3 bis 6 nachfolgend erläutert. Die Fig. 3 zeigt ein Bild der Fassade 1, die auch in Fig. 1 gezeigt ist. Das Bild zeigt den Balkon 2 von unten. Darauf ist die untere Kante der Balkontür 3 vollständig durch den Balkon 2 verdeckt. Die Balkontür 3 ist dabei in der Regel nicht in der Ebene der Wand, weshalb nicht die Wand als Referenzebene benutzt werden kann, um die verdeckte Kante zu finden. Stattdessen wird erfindungsgemäß die obere Kante L2 der Balkontür 3 markiert, da diese in derselben Ebene liegt und folglich in Beziehung zur gesuchten geometrischen Größe steht.

Es wird nun eine erste Hilfsebene E2 bestimmt (Fig. 4), die parallel zum Gravitationsvektor g steht und die Kante L2 enthält. Die Hilfsebene E2 liegt damit in der Ebene der Balkontür. Aus L2 ist auch bekannt, wo die Oberkante, die rechte und linke Kante der Tür in der Ebene E2 ist. Einzig die untere Kante der Balkontür 3 ist unbekannt.

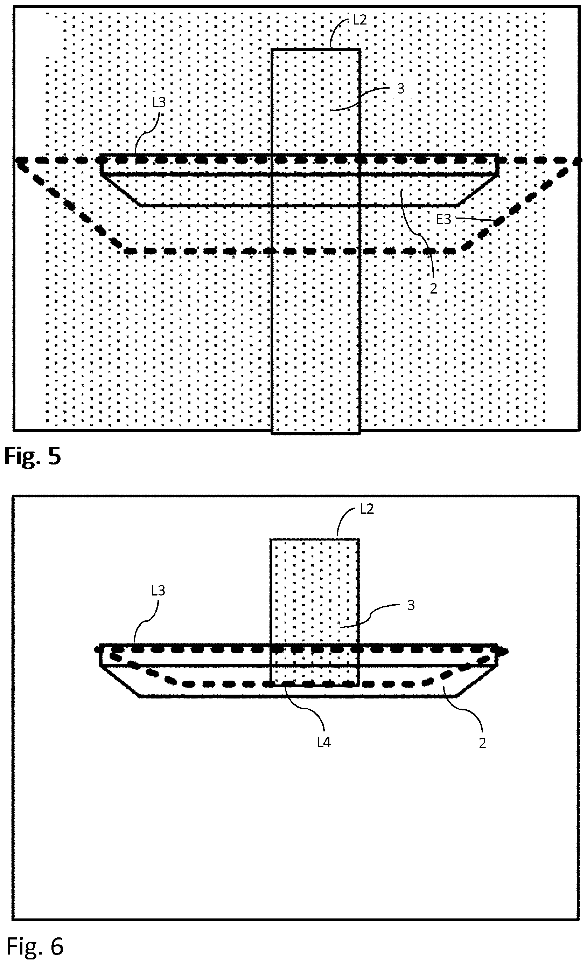

Weiterhin wird eine zweite Hilfsebene E3 berechnet (Fig. 5), die senkrecht zum Gravitationsvektor g steht und die vordere Kante L3 des Balkons 2 enthält. Aus L3 ist auch die vordere, rechte und linke Kante der Balkonplatte bekannt. Einzig die hintere Kante fehlt.

Schließlich wird aus der Schnittmenge der beiden Hilfsebenen E2 und E3 eine Schnittgerade L4 bestimmt (Fig. 6). Diese stellt die verdeckte untere Kante der Tür 3 und gleichzeitig die hintere Kante der Balkonplatte dar. Damit kann das System automatisch Vierecke im 3D-Raum erstellen, die in den jeweiligen Ebenen liegen und die Abmessungen und Positionen von Balkontür 3 und Balkonplatte haben.

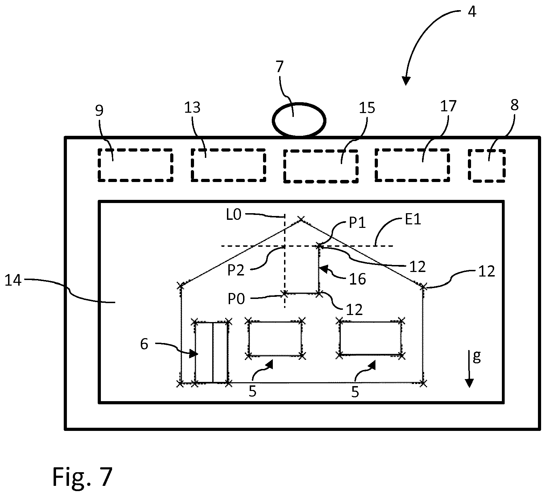

In Fig. 7 ist beispielshaft und schematisch ein erfindungsgemäßes Aufmaßgerät 4 gezeigt. Das Aufmaßgerät 4 weist eine Bildaufnahmeeinheit 7 zum Aufnehmen mehrerer visuelle Bilder eines Objekts von unterschiedlichen Positionen auf.

Weiterhin weist das Aufmaßgerät 4 eine Lagesensoreinheit 8 auf, zur Bestimmung der Ausrichtung der Bildaufnahmeeinheit 7 in Bezug auf den Schwerkraftvektor. Diese Ausrichtungsinformation kann zu jedem Bild gespeichert werden. Die Lagesensoreinheit 8 kann beispielsweise einen oder mehrere Linearbeschleunigungssensoren und/oder einen Drehratensensor und/oder einen GPS-Empfänger aufweisen.

Das Aufmaßgerät 4 weist eine Modellierungseinheit 9 zur Erstellung eines dreidimensionalen Modells des aufgenommenen Objekts aus den einzelnen Bildern auf. Dabei wird auch der Schwerkraftvektor g des Modells 11 bestimmt.

Das erfindungsgemäße Aufmaßgerät weist weiter einen Modellspeicher 13 auf, in dem ein dreidimensionales Modell 11 des Objekts hinterlegbar oder hinterlegt ist. Die Modellierungseinheit 9 kann das aus den Bildern berechnete Modell 11 beispielsweise hier ablegen.

Das Aufmaßgerät 4 im Beispiel besitzt weiterhin einen Bildschirm 14 mit einer berührungsempfindlichen Eingabefunktion (Touchscreen) auf der das Modell 11 und die präzisen Punktmerkmale 12 darstellbar sind. Der Bildschirm dient auch als Markiereinheit zum Markieren von präzisen Punktmerkmalen für das erfindungsgemäße Verfahren.

Wenn in dem Modell 11, wie in Fig. 1 und 2 beschrieben, eine gesuchte Messgröße von einem unbekannten Punktmerkmal abhängt, beispielsweise an diesem beginnt oder endet, können am Bildschirm die beiden in Beziehung stehenden Merkmale ausgewählt werden.

Eine Einpassungseinheit 15 legt dann eine erste Hilfsgeometrie, die wenigstens das erste markierte Merkmal enthält und parallel zum Schwerkraftvektor verläuft, und eine zweite Hilfsgeometrie, die wenigstens das zweite markierte Merkmal enthält und senkrecht zum Schwerkraftvektor verläuft in das Modell. Die Hilfsgeometrien und deren Schnittpunkt können auf dem Bildschirm interaktiv angezeigt werden. So können auch die Messgrößen mit dem unbekannten Merkmal bestimmt werden.

Im Beispiel ist beispielsweise beim Fenster 16 im Giebel die linke obere Ecke P2 unbekannt. Als in Beziehung stehende präzisen Merkmale 12 können dann die rechte obere Ecke P1 und die linke untere Ecke P0 ausgewählt werden. Die Einpassungseinheit 15 bestimmt dann eine erste Hilfsgerade L0, die parallel zum Schwerkraftvektor g durch P0 verläuft. Und eine zweite Hilfsgerade E1, die senkrecht zum Schwerkraftvektor g durch P1 verläuft. Der Schnittpunkt der beiden Hilfsgeometrien entspricht der gesuchten unbekannten linken oberen Ecke P2.

Die in der Fig. 4 separat gezeichneten Modellspeicher 13, Modellierungseinheit 9, Berechnungseinheit 17 und die Einpassungseinheit 16 können beispsielsweise auch in einem Mikroprozessor, Mikrocontroller oder einem speziell angepassten SoC integriert sein. Die Erfindung ist daher in keiner Weise auf die gezeigte Darstellung beschränkt.

Die Erfindung beschreibt ein Aufmaßgerät 4 zur Bestimmung einer geometrischen Messgröße eines Objektes 1 anhand eines in einem Modellspeicher 13 hinterlegten dreidimensionalen Modells 11, das einen Schwerkraftvektor g aufweist, wobei das Aufmaßgerät 4 eine Markiereinheit 14 zum Markieren eines ersten Merkmals P0 und eines zweiten Merkmals P1 in dem Modell 11 aufweist und eine Einpassungseinheit 15 aufweist, zur Bestimmung einer ersten Hilfsgeometrie L0, die wenigstens das erste markierte Merkmal P0 enthält und parallel zum Schwerkraftvektor g verläuft, und zur Bestimmung einer zweiten Hilfsgeometrie E1), die wenigstens das zweite markierte Merkmal P1 enthält und senkrecht zum Schwerkraftvektor g verläuft und zum Bilden des Schnittpunkts P2 der Hilfsgeometrien L0, E1, wobei eine Berechnungseinheit 17 zum Berechnen der geometrischen Messgröße mit Hilfe des Schnittpunkts P2 vorhanden ist.

### Bezugszeichenliste

- 1: Fassade
- 2: Balkon
- 3: Balkontür
- 4: Aufmaßgerät
- 5: Fenster
- 6: Tür
- 7: Bildaufnahmeeinheit
- 8: Lagesensoreinheit
- 9: Modellierungseinheit
- 11: Modell
- 13: Modellspeicher
- 14: Bildschirm
- 15: Einpassungseinheit
- 16: Fenster im Giebel
- 17: Berechnungseinheit
- P0: erstes Merkmal
- P1: zweites Merkmal
- P2: Schnittpunkt
- L0: erste Hilfsgerade
- E1: zweite Hilfsebene
- E2: Hilfsebene
- E3: Hilfsebene
- L2: Hilfslinie
- L3: Hilfslinie
- L4: Hilfslinie
- g: Schwerkraftvektor
- a: Höhe der Balkontür
- b: Tiefe des Balkons

## Patentansprüche

1. Verfahren zur Bestimmung einer geometrischen Messgröße (a,b) eines Objektes (1) wobei:
• in einem Modellierungsschritt ein dreidimensionales Modell (11) des Objekts (1) bereit gestellt wird, bei dem der Schwerkraftvektor (g) bekannt ist,
• in einem Markierschritt in dem Modell (11) ein erstes Merkmal (P0) und ein zweites Merkmal (P1) markiert werden, die mit der zu messenden geometrischen Größe in Beziehung stehen,
• in einem Einpassungsschritt eine erste Hilfsgeometrie (L0) bestimmt wird, die wenigstens das erste markierte Merkmal (P0) enthält und parallel zum Schwerkraftvektor (g) verläuft, und eine zweite Hilfsgeometrie (E1) bestimmt wird, die wenigstens das zweite markierte Merkmal (P1) enthält und senkrecht zum Schwerkraftvektor (g) verläuft, und ein Schnittpunkt (P2) der Hilfsgeometrien berechnet wird,
• In einem Berechnungsschritt anhand des Schnittpunkts (P2) die geometrische Messgröße (a,b) berechnet wird.

2. Verfahren zur Ergänzung eines dreidimensionalen Modells (11) eines Objektes (1) wobei:
• in einem Modellierungsschritt ein dreidimensionales Modell (11) des Objekts (1) bereit gestellt wird, bei dem der Schwerkraftvektor (g) bekannt ist,
• in einem Markierschritt in dem Modell (11) ein erstes Merkmal (P0) und ein zweites Merkmal (P1) markiert werden,
• in einem Einpassungsschritt eine erste Hilfsgeometrie (L0) bestimmt wird, die wenigstens das erste markierte Merkmal (P0) enthält und parallel zum Schwerkraftvektor (g) verläuft, und eine zweite Hilfsgeometrie (E1) bestimmt wird, die wenigstens das zweite markierte Merkmal (P1) enthält und senkrecht zum Schwerkraftvektor (g) verläuft, und ein Schnittpunkt (P2) der Hilfsgeometrien berechnet wird, und dieser Schnittpunkt (P2) als Merkmal in das dreidimensionale Modell (11) aufgenommen wird.

3. Verfahren nach Anspruch 2, **dadurch gekennzeichnet, dass** in einem Berechnungsschritt eine geometrische Messgröße (a,b) zwischen zwei Merkmalen des dreidimensionalen Modells (11) berechnet wird.

4. Verfahren nach einem der Ansprüche 1 bis 3, **dadurch gekennzeichnet, dass** in dem Einpassungsschritt eine Hilfsgeometrie eine Hilfsebene oder eine Hilfsgerade ist.

5. Verfahren nach einem der Ansprüche 1 bis 4, **dadurch gekennzeichnet, dass** in dem Markierschritt ein Merkmal ein Punktmerkmal, ein Linienmerkmal oder ein anderes identifizierbares Merkmal ist.

6. Verfahren nach einem der Ansprüche 1 bis 5, wobei:
• in einem Aufnahmeschritt mit einer Bildaufnahmeeinheit (7) mehrere visuelle Bilder des Objekts (1) von unterschiedlichen Positionen aufgenommen werden, und gleichzeitig zu jedem Bild die Ausrichtung der Bildaufnahmeeinheit in Bezug auf den Schwerkraftvektor (g) gespeichert wird,
• in einem Modellierungsschritt ein dreidimensionales Modell (11) des aufgenommenen Objekts (1) aus den einzelnen Bildern erstellt wird, wobei der Schwerkraftvektor (g) aus den einzelnen Ausrichtungen der Bilder bestimmt wird,

7. Aufmaßgerät (4) zur Bestimmung einer geometrischen Messgröße eines Objektes (1)
• mit einem Modellspeicher (13), in dem ein dreidimensionales Modell (11) des Objekts (1) hinterlegbar oder hinterlegt ist, und einen Schwerkraftvektor (g) aufweist,
• mit einer Anzeigeeinheit (14) zum Anzeigen des Modells (11),
• mit einer Markiereinheit (14) zum Markieren eines ersten Punktmerkmals (P0) und eines zweiten Punktmerkmals (P1) in dem Modell (11),
• mit einer Einpassungseinheit (15), zur Bestimmung einer ersten Hilfsgeometrie (L0), die wenigstens das erste markierte Merkmal (P0) enthält und parallel zum Schwerkraftvektor (g) verläuft, und zur Bestimmung einer zweiten Hilfsgeometrie (E1), die wenigstens das zweite markierte Merkmal (P1) enthält und senkrecht zum Schwerkraftvektor (g) verläuft, und zum Bilden des Schnittpunkts (P2) der Hilfsgeometrien (L0,E1),
• mit einer Berechnungseinheit (17), zum Berechnen der geometrischen Messgröße anhand des Schnittpunkts (P2) der Hilfsgeometrien (L0,E1).

8. Aufmaßgerät (4) nach Anspruch 7,
• mit einem Modellspeicher (13), in dem ein dreidimensionales Modell (11) des Objekts (1) hinterlegbar oder hinterlegt ist, und einen Schwerkraftvektor (g) aufweist,
• mit einer Anzeigeeinheit (14) zum Anzeigen des Modells (11),
• mit einer Markiereinheit (14) zum Markieren eines ersten Merkmals (P0) und eines zweiten Merkmals (P1) in dem Modell (11),
• mit einer Einpassungseinheit (15), zur Bestimmung einer ersten Hilfsgeometrie (L0), die wenigstens das erste markierte Merkmal (P0) enthält und parallel zum Schwerkraftvektor (g) verläuft, und zur Bestimmung einer zweiten Hilfsgeometrie (E1), die wenigstens das zweite markierte Merkmal (P1) enthält und senkrecht zum Schwerkraftvektor (g) verläuft, und zum Bilden des Schnittpunkts (P2) der Hilfsgeometrien (L0,E1) und zum Einpassen des Schnittpunktes (P2) in das dreidimensionalen Modell (11).

9. Aufmaßgerät (4) nach Anspruch 7 oder 8, mit einer Berechnungseinheit (17), zum Berechnen von geometrischen Messgröße zwischen Merkmalen des dreidimensionalen Modells (11).

10. Aufmaßgerät (4) nach einem der Ansprüche 7 bis 9,
• mit einer Bildaufnahmeeinheit (7) zum Aufnehmen mehrerer visuelle Bilder des Objekts (1) von unterschiedlichen Positionen,
• mit wenigstens einer Lagesensoreinheit (8), zur Ermittlung und Speicherung der Ausrichtung der Bildaufnahmeeinheit (7) in Bezug auf den Schwerkraftvektor (g) zu jedem Bild,
• mit einer Modellierungseinheit (9) zur Erstellung eines dreidimensionalen Modells (11) des aufgenommenen Objekts (1) aus den einzelnen Bildern, und zur Bestimmung des Schwerkraftvektors (g) aus den aufgezeichneten Ausrichtungen der einzelnen Bilder.
